(19) Europäisches Patentamt / European Patent Office / Office européen des brevets

(11) **EP 2 028 513 A1**

(12) **EUROPEAN PATENT APPLICATION**

(43) Date of publication:
**25.02.2009 Bulletin 2009/09**

(51) Int Cl.:
*G02B 6/42* (2006.01)    *H01S 3/067* (2006.01)

(21) Application number: **08162657.4**

(22) Date of filing: **20.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.08.2007 JP 2007214652**

(71) Applicant: **Toyota Jidosha Kabushiki Kaisha Toyota-shi, Aichi-ken (JP)**

(72) Inventors:
- **Kojima, Seiji**
  **Chiyoda-ku Tokyo (JP)**
- **Hongo, Akihito**
  **Chiyoda-ku Tokyo (JP)**
- **Ohsono, Kazumasa**
  **Chiyoda-ku Tokyo (JP)**
- **Yao, Bing**
  **Chiyoda-ku Tokyo (JP)**

- **Satou, Akio**
  **Toyota-shi Aichi (JP)**
- **Yanaka, Kohei**
  **Toyota-shi Aichi (JP)**
- **Hasegawa, Kazuo**
  **Nagakute-cho Aichi (JP)**
- **Inoue, Daisuke**
  **Nagakute-cho Aichi (JP)**
- **Ito, Hiroshi**
  **Nagakute-cho Aichi (JP)**
- **Ichikawa, Tadashi**
  **Nagakute-cho Aichi (JP)**
- **Saito, Kazuya**
  **Nagoya-shi Aichi (JP)**

(74) Representative: **Betten & Resch**
**Patentanwälte**
**Theatinerstrasse 8**
**(Fünf Höfe)**
**80333 München (DE)**

(54) **Optical waveguide type optical coupling arrangement**

(57)    A plurality of light emitting elements **11** are arranged in parallel with a constant pitch to provide a semiconductor laser bar **10**. An optical waveguide **20** has a core part **21** for guiding a light emitted from each of the light emitting elements **11** and a cladding part **22** formed around the core part **21**. An optical fiber **30** has a core **31** and a cladding **32** formed around the core **31** for confining the light to the core **31**. The optical waveguide is bonded to a side surface of the optical fiber **30**, and the light emitted from the semiconductor laser bar **10** is inputted to a side surface of the core **31** of the optical fiber **30** via the core part **21** of the optical waveguide **20**.

**FIG.1**

EP 2 028 513 A1

## Description

The present application is based on Japanese Patent Application Nos. 2007-214652 filed on August 21, 2007, the entire contents of which are incorporated herein by reference.

BACKGROUND OF THE INVENTION

**1.** FIELD OF THE INVENTION

The present invention relates to an optical waveguide type optical coupling arrangement for optically coupling a semiconductor laser bar and an optical fiber, in more particular, to an optical waveguide type optical coupling arrangement to be applied to an optical fiber laser.

**2.** RELATED ART

As to a light emitting part of a semiconductor laser, a light emitting element is provided a basic unit. The light emitting part in which several tens pieces of the light emitting elements are arranged in parallel in a lateral direction is called as a "laser bar", and the light emitting part in which several pieces of the laser bars are arranged in a vertical direction is called as a "laser stuck".

The structure of the conventional laser bar will be explained referring to data sheets of a laser bar "BAC**50**c-**9**XX-**03/04"** manufactured by Bookham, Inc. (http: //www.bookham.com/ datasheets/ hpld/BAC**50**C-**9**xx-03.cfm) searched by March **1, 2007.**

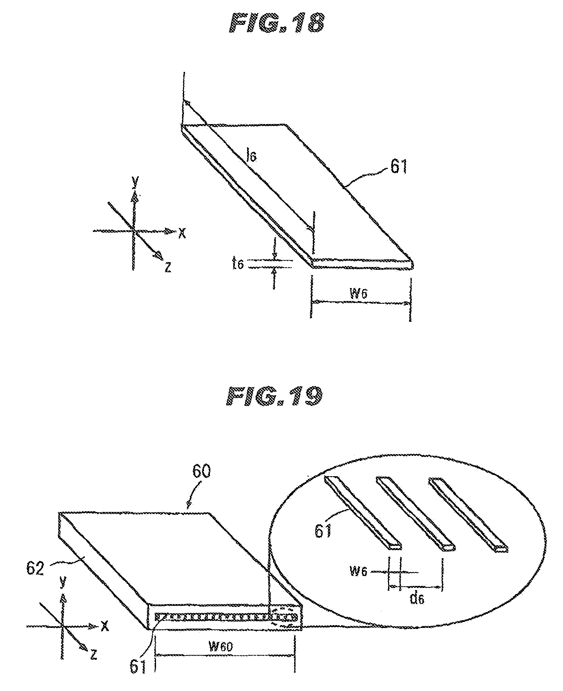

**FIG.18** is a perspective view of a semiconductor laser as the light emitting element **61.** A laser bar **60** comprises a plurality of light emitting elements **61** arranged in parallel in a substrate **62,** and the number of the light emitting elements **61** is nineteen.

The light emitting element **61** has a thickness t**6** of **1** $\mu$m, a width w**6** of **100** $\mu$m, and a resonant length 16 of **24** mm as shown in **FIG.18.**

**FIG.19** is a perspective view of the laser bar **60** in which the light emitting elements **61** are incorporated.

The light emitting elements **61** are arranged in parallel within an interval (pitch) of d**6** of **500** $\mu$m in the substrate **62** as shown in **FIG.19.** A total width w**60** of the light emitting elements **61** arranged in lateral direction is **50** mm in this example.

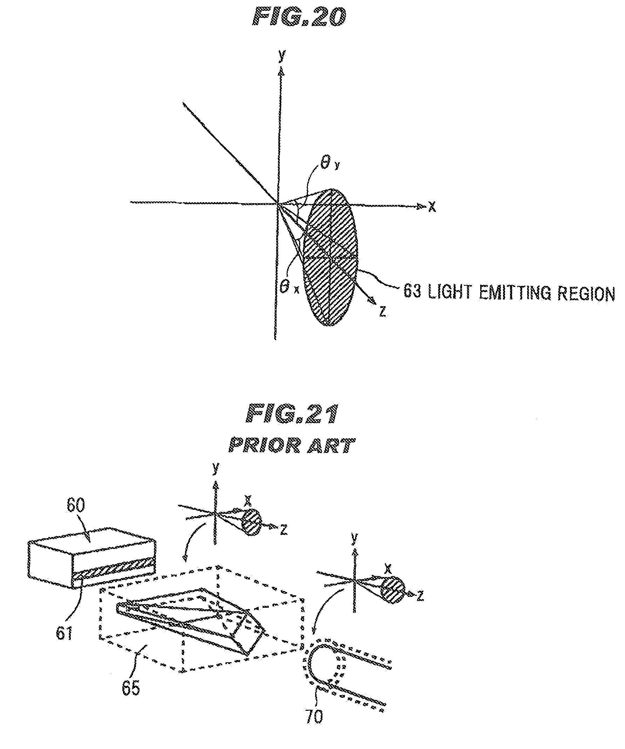

**FIG.20** is an explanatory diagram showing a spread angle of a light emitted from the laser bar **60.**

In general as shown in **FIG.20,** the light emitted from light emitting parts of the light emitting elements **61** (the number of the light emitting elements **61** is nineteen) has a spread angle $\theta$x of about **6°** (90% of a light quantity) in an x-axis direction and a spread angle $\theta$y of about **60°** (**90**% of the light quantity) in a y-axis. Herein, when the spread angle $\theta$x is about 6°, a numerical aperture (NA) is sin**6°**, namely **0.10** (NA=sin**6°=0.10**). Similarly, when the spread angle $\theta$y is about **60°**, the NA is sin**60°**, namely **0.87** (NA=sin**60°=0.87**).

Therefore, a light emitting region **63** in a z-axis which is distant enough from the light emitting parts of the laser bar **60** has a shape as shown in **FIC.20.**

**FIG.21** is an explanatory diagram showing a conventional coupling arrangement between a laser bar **60** comprising a semiconductor laser and an optical fiber **70** by an optical waveguide structure **65.**

For inputting the light emitted from the laser bar **60** into the optical fiber **70,** there is a technique of converting a shape of the light emitted from the laser bar **60** from an elliptical shape to a circular shape by using the optical waveguide structure **65,** and inputting the converted light with high efficiency into the optical fiber **70,** as shown in **FIG.21.** Japanese Patent No, 3607211 discloses an example of such coupling arrangement.

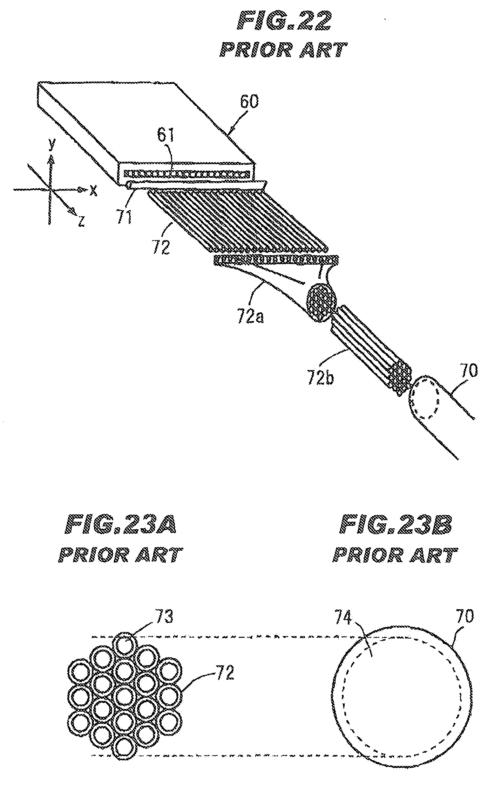

**FIG.22** is an explanatory diagram showing another conventional coupling arrangement between a laser bar **60** comprising a semiconductor laser and an optical fiber **70** by optical fibers **72.**

As shown in **FIG.22,** each of the light emitting elements **61** in the laser bar **60** is optically coupled to each of the optical fibers **72** to be bundled. Thereafter, the optical fibers **72** to be bundled are bundled by a binder **72**a to provide a bundled part **72**b, and the bundled part **72**b is optically coupled to the optical fiber **70** as a target. Herein, a beam spread angle of the laser bar **60** in the y-axis direction is large, the beam spread angle of the laser bar **60** in the y-axis direction is reduced by using a collimate lens **71** and optically coupled to the optical fibers **72** to be bundled.

**FIGS.23**A and **23**B are lateral cross sectional views of the bundled part **72**b of the optical fiber **72** and the optical fiber **70.**

As shown in **FIGS.23**A and **23**B, the cross sections of the bundled part 72b of the optical fiber **72** and the optical fiber **70** are determined such that a distance between cores **73** provided as an outermost layer in the optical fiber **72** coincides with a diameter of a core **74** of the optical fiber **70.**

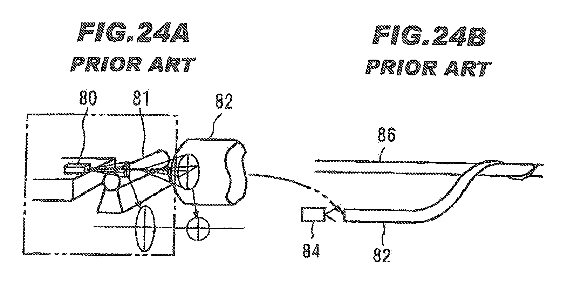

**FIGS.24**A and **24**B are explanatory diagrams showing a still another conventional coupling arrangement between a semiconductor laser and a multimode optical fiber **86** by an optical fiber **82.**

Japanese Patent No.3337691 discloses an example of techniques for inputting the laser light emitted from the semiconductor laser to a target optical fiber from a side surface by using a feeding optical fiber. There is a technique of converting a shape of the light emitted from a semiconductor light emitting element **80** (a single light emitting element) from an elliptical shape to a circular shape by using an cylindrical lens **81** and inputting the converted light with high efficiency into an optical fiber for transmission (feeding optical fiber) **82** as shown in **FIG.24**A, while feeding a light quantity of a light emitted from a multimode light source **84** to a multimode optical fiber **86** via the feeding optical fiber **82** at a side surface of the multimode optical fiber **86** at another end of the feeding optical fiber **82** as shown in **FIG.24B.**

However, in the optical coupling arrangement as shown in **FIG.21,** there is a disadvantage in that difficulties exist in manufacturing the optical waveguide structure **65.** Further, the optical coupling method shown in **FIG.21** is a technique of inputting the laser light into an end surface of the target optical fiber **70,** so that it is difficult to input the laser light with high efficiency to the optical fiber **70** when the laser light is largely spread in the y-axis direction, i.e. the spread angle in the y-axis direction is large.

Further, in the optical coupling arrangement using the bundling of the optical fibers **72** as shown in **FIG. 22,** there is a disadvantage in that a structure thereof is complicated since the optical coupling to the optical fibers **72** to be bundled is performed by using the means such as the collimate lens **71** interposed between the laser stuck **60** and the optical fibers **72** to be bundled. Further, the bundled part **72b** includes cladding layers of the optical fibers **72** to be bundled, so that it is impossible to input the laser light with high efficiency to the optical fiber **70** unless the diameter of the core **74** of the optical fiber **70** is greater than a diameter of a total region of the cores **73** to which the laser light is guided.

Still further, in the optical coupling arrangement as shown in **FIG.24**, the laser light is inputted from one light emitting element **80** for one optical transmission fiber **82.** Therefore, for the purpose of using a plurality of the optical transmission fibers **82**, a plurality of the light emitting elements **80** for outputting the laser light are required and the number of the light emitting elements **80** should be same as that of the optical transmission fibers **82,** For example, when the laser light emitted from the light emitting element **80** is input to the optical fiber **86** from the side surface as shown in **FIG.24**B, the number of optical coupling points to the side surface of the optical fiber **86** is increased since one transmission optical fiber **86** is required for each one light emitting element. Therefore, a total structure of an optical coupling apparatus is complicated and large-scaled.

In addition, a mechanism for inputting the laser light to the transmission optical fiber **82** using the cylindrical lens **81** as shown in **FIG.24**A will be complicated in order to apply the optical coupling arrangement as shown in **FIGS.24**A and **24**B to the laser bar.

SUMMARY OF THE INVENTION

Therefore, it is an object of the present invention to provide an optical waveguide type optical coupling arrangement for optically coupling the light emitted from a semiconductor laser bar to an optical fiber with high efficiency by a simple structure.

According to a feature of the invention, an optical waveguide type optical coupling arrangement comprising:

a semiconductor laser bar comprising a plurality of light emitting elements arranged in parallel;
an optical waveguide comprising a core part for guiding a light emitted from each of the light emitting elements in the semiconductor laser bar and a cladding part formed around the core part; and
an optical fiber comprising a core and a cladding formed around the core for confining the light into the core;

wherein the optical waveguide is bonded to a side surface of the optical fiber,
wherein the light emitted from the laser bar is input to a side surface of the core of the optical fiber.

In the optical waveguide type optical coupling arrangement, the core part of the optical waveguide may have a tapered shape such that a spread angle of the light emitted from the light emitting element is not greater than an acceptance angle of the optical fiber.

In the optical waveguide type optical coupling arrangement, a size of the core part of the optical waveguide at an output end side may be determined such that a spread angle of the light at the output end side is not greater than an acceptance angle of the optical fiber.

In the optical waveguide type optical coupling arrangement, the core of the optical fiber may comprise a bonding surface bonded to the optical waveguide, the optical waveguide comprises a bonding surface bonded to the core, and the bonding surface of the core is flat to the bonding surface of the optical waveguide.

In the optical waveguide type optical coupling arrangement, the core part may comprise a mechanism for changing a spread angle of a light propagated therethrough by changing a shape of the core part along a light guiding axis.

In the optical waveguide type optical coupling arrangement, the core part comprises a deformed part that is deformed along a light guiding axis fiber and the deformed part changes a spread angle of a light propagated through the deformed part.

In the optical waveguide type optical coupling arrangement, the core part of the optical waveguide may comprise a side surface facing to the semiconductor laser bar and the side surface of the core part is lens-processed.

In the optical waveguide type optical coupling arrangement, the core part of the optical waveguide may comprises a side surface facing to the semiconductor laser bar, and the side surface of the core part has a convex cross section.

In the optical waveguide type optical coupling arrangement, it is preferable that the optical waveguide changes a direction of the light emitted from each of the light emitting elements and propagated through the core part and guides the light to a side surface of the optical fiber.

In the optical waveguide type optical coupling arrangement, the optical fiber may comprise a double clad fiber for an optical fiber laser, comprises a core doped with a rare earth element, and two different claddings formed around the core.

According to another feature of the invention, an optical waveguide for an optical waveguide type optical coupling arrangement comprises:

a core part for guiding a light emitted from each of the light emitting elements in the semiconductor laser bar; and
a cladding part formed around the core part,

wherein the core part comprises a deformed part that is deformed along a light guiding axis and the deformed part changes a spread angle of a light propagated through the deformed part.

(Effect of the Invention)

According to the present invention, it is possible to provide an optical waveguide type optical coupling arrangement for optically coupling the light emitted from a semiconductor laser bar to an optical fiber with high efficiency by a simple structure.

BRIEF DESCRIPTION OF THE DRAWINGS

Next, preferred embodiments according to the present invention will be explained in conjunction with appended drawings, wherein:

FIG.1 is a schematic diagram of an optical waveguide type optical coupling arrangement in a first preferred embodiment according to the present invention;
FIG.2 is a partial cross sectional view along yz-plane of the optical waveguide type optical coupling arrangement shown in FIG.1;
FIG.3 is an explanatory diagram showing a cross section of an optical waveguide part in the optical waveguide type optical coupling arrangement shown in FIG.1;
FIG.4 is a partial cross sectional view along y- and z-axes of an optical waveguide type optical coupling arrangement in a variation of the first preferred embodiment shown in FIG.1;
FIG.5 is an explanatory diagram showing a core part of an optical waveguide in an optical waveguide type optical coupling arrangement in the second preferred embodiment according to the invention;
FIG.6 is a simplified schematic diagram showing a structure of the core part in the optical waveguide as shown in FIG.5;
FIG.7A and FIG.7B are explanatory diagrams showing a relationship between a size of a light emitting element and an divergence angle in the optical waveguide type optical coupling arrangement shown in FIG.5;
FIG.8 is a cross sectional view of an optical fiber in the optical waveguide type optical coupling arrangement shown in FIG.5;
FIGS.9A and 9B are cross sectional views of variations of the optical fiber in the optical waveguide type optical coupling arrangement shown in FIG.5;
FIG.10A and FIG.10B are explanatory diagrams showing a relationship between a size of an optical waveguide coupling part and an divergence angle in the optical waveguide type optical coupling arrangement shown in FIG.5;
FIG.11 is a simplified schematic diagram showing a structure of a variation of the core part in the optical waveguide as shown in FIG.6;
FIG.12A and FIG.12B are explanatory diagrams showing a relationship between a size of an input and output part and a divergence angle in the core part shown in FIG.11;
FIG.13 is a schematic diagram of an optical waveguide type optical coupling arrangement in a third preferred embodiment according to the present invention;
FIG.14 is a table of graphs showing a coupling efficiency of an input laser light to the optical fiber in the present invention;
FIG.15 is a schematic diagram of an optical waveguide type optical coupling arrangement applied to an optical fiber laser in a fourth preferred embodiment according to the invention;
FIG.16 is a schematic diagram of a perspective view of an optical waveguide structure in the optical waveguide type optical coupling arrangement according to the invention;
FIGS.17A and 17B are explanatory diagrams showing a method for forming an optical waveguide core in the optical waveguide structure in the invention;
FIG.18 is a perspective view of a semiconductor laser as the light emitting element;
FIG.19 is a perspective view of the laser bar in which the light emitting elements are incorporated.
FIG.20 is an explanatory diagram showing a spread angle of a light emitted from the laser bar;
FIG.21 is an explanatory diagram showing a conventional coupling arrangement between a laser bar comprising a semiconductor laser and an optical fiber by an optical waveguide structure;
FIG.22 is an explanatory diagram showing another conventional coupling arrangement between a laser bar comprising a semiconductor laser and an optical fiber by optical fibers;
FIGS.23A and 23B are lateral cross sectional views of the bundled part of the optical fiber and the optical fiber; and
FIGS.24A and 24B are explanatory diagrams showing a still another conventional coupling arrangement between a semiconductor laser and a multimode optical fiber by an optical fiber.

DETAILED DESCRIPTION OF PREFERRED EMBODIMENTS

Next, referred embodiments according to the present invention will be explained in more detail in conjunction with the appended drawings.

(First preferred embodiment)

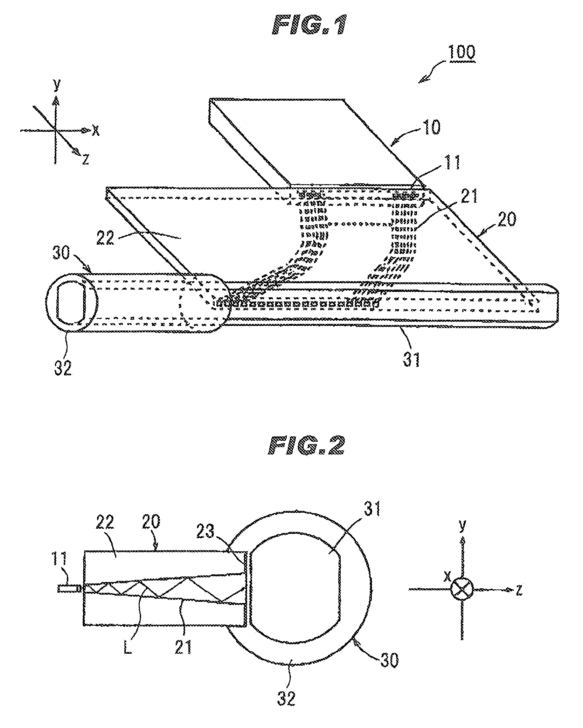

**FIG.1** is a schematic diagram of an optical waveguide type optical coupling arrangement for inputting a laser light emitted from a semiconductor laser bar by using an optical waveguide in a first preferred embodiment according to the present invention.

An optical waveguide type optical coupling arrangement **100** comprises a semiconductor laser bar **10**, an optical waveguide **20,** and an optical fiber **30,** in which a laser light emitted from the semiconductor laser bar **10** is inputted to a side surface of the optical fiber 30 via the optical waveguide **20.**

The semiconductor laser bar **10** comprises a plurality of light emitting elements **11** arranged in parallel in a lateral direction with a constant pitch. The conventional semiconductor laser bar such as "BAC**50**c-**9XX-03/04**" may used as the semiconductor laser bar **10.**

The optical waveguide **20** comprises a plurality of core parts **21** and a cladding part **22.** The core parts **21** are arranged in a lateral direction with a constant pitch.

The optical fiber **30** comprises a core **31** and a cladding **32** provided at an outer periphery of the core **31.**

It is preferable that the optical waveguide **20** has a plate-like structure as shown in **FIG.1,** in order to facilitate a bonding (connection) between the optical waveguide **20** and the semiconductor laser bar **10** and a bonding between the optical waveguide **20** and the optical fiber **30.**

In the optical waveguide **20,** the core parts **21** are formed with the pitch equal to the pitch between the adjacent light emitting element **11** at a side surface facing to the semiconductor laser bar **10.** The laser light emitted from each of the light emitting elements **11** of the semiconductor laser bar **10** is transmitted through the core part **21.**

On the other hand, in the optical fiber **30** to which the laser light is inputted, it is preferable that the core **30** has a non-circular shape in order to facilitate a connection between the optical fiber **30** and the plate-like optical waveguide **20** and accelerate the input of the laser light. For example, the core **31** may have a tambour shape having two flat sides and two arched sides in its cross section.

**FIG.2** is a partial cross sectional view along yz-plane of the optical waveguide type optical coupling arrangement shown in **FIG.1.**

In **FIG.2,** a zigzag line shows a transmission of the laser light L emitted from the light emitting element **11.**

The light emitting element **11** of the semiconductor laser bar **10** has a large spread angle in the y-axis direction as explained with referring to **FIG.18.** In general, the spread angle of the light element **11** is in general about **60°.** An acceptance angle of the optical fiber is determined by a relative refractive index difference between the core and the cladding of the optical fiber. NA of a multimode optical fiber having a large diameter core is in general **0.2** to **0.5** (corresponding to **11°** to **30'**). Therefore, the spread angle of the light emitting element **11** in the y-axis direction is greater than the acceptance angle of the conventional optical fiber, so that it is impossible to realize an optical coupling to the conventional optical fiber with high efficiency.

Therefore, the core part **21** of the optical waveguide **20** as shown in **FIG.2** is formed to have a tapered shape and a reflection coating **23** is formed at an end surface of the cladding part **22** at an output end side, so as to reduce the spread angle in the y-axis direction.

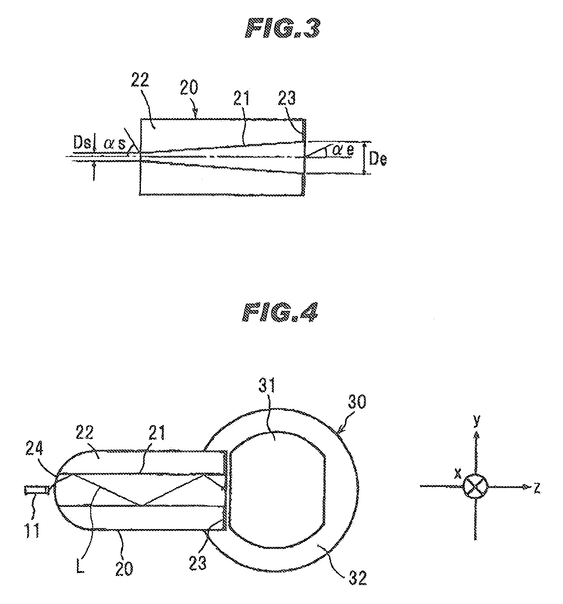

**FIG.3** is an explanatory diagram showing a cross section of an optical waveguide part in the optical waveguide type optical coupling arrangement shown in **FIG.1.**

Herein, the reduction in the spread angle in the y-axis direction is approximately expressed by formula (**1**), by treating the spread angle in the y-axis independently:

$$Ds \times \sin(\alpha s) = De \times \sin(\alpha e) \cdots (1),$$

wherein Ds is a core length in the y-axis direction at an input end side of the optical waveguide, De is a core length in the y-axis direction at an output end side of the optical waveguide, αs is a spread angle in the y-axis direction at the input end side of the optical waveguide, and αe is a spread angle in the y-axis direction at the output end side of the optical waveguide.

Accordingly, it is possible to realize the high efficiency optical coupling in the y-axis direction with the optical fiber **30,** by determining the core length De in the y-axis direction at the output end side (i.e. at a side of the reflection coating **23**) such that the spread angle αe in the y-axis direction at the output end (i.e. at the side of the reflection coating **23**) in **FIG.3** is equal to or less than the acceptance angle of the optical fiber **30.**

**FIG.4** is a partial cross sectional view along yz-plane of an optical waveguide type optical coupling arrangement in a variation of the first preferred embodiment shown in **FIG.1.** In **FIG.4,** the optical waveguide **20** has a convex shaped end surface **24** which is opposite to the reflection coating **23.** The end surface **24** is lens-processed.

It is also possible to realize the high efficiency optical coupling with the optical fiber 30, by conducting a lens processing on the end surface **24** at the input end side facing to the semiconductor laser bar **10** (i.e. at a side of the light emitting element **11**) in order to reduce the spread angle ae in the y-axis direction at the output end side (i.e. at the side of the reflection coating **23**) as shown in **FIG.4.**

It is effective to provide the reflection coating **23** on the end surface facing to the optical fiber **30** in the optical waveguide **20** shown in **FIGS.2** to **4,** in order to prevent the light inputted to the core **31** in the optical fiber **30** from being incident to the cladding part **22** in the optical waveguide **20** when the input light is propagated through the **core 31** of the optical fiber **30,** thereby realizing the high efficiency optical coupling.

(Second preferred embodiment)

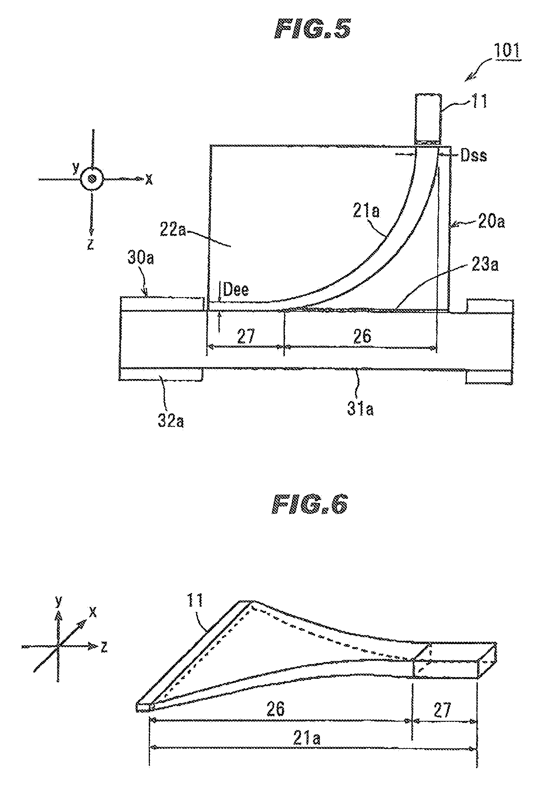

**FIG.5** is an explanatory diagram showing a core part **21**a of an optical waveguide **20**a in an optical waveguide type optical coupling arrangement **101** in the second preferred embodiment according to the invention.

**FIG.5** shows one of the light emitting elements **11** and the core part **21**a of the optical waveguide **20**a for guiding the laser light emitted from the light emitting element **11** along an xz-plane. The optical waveguide **20**a comprises the core part **21**a and a cladding part **22**a. The optical fiber **30**a comprises a core **31**a and a cladding **32**a. The core part **21**a comprises a deformed part **26** and a coupling part **27** for coupling the deformed part **26** and the optical fiber **30**a.

The deformed part **26** is deformed along a light guiding axis (y-axis) and the deformed part **26** changes a spread angle of the light propagated through the deformed part **26**. Namely, the core part **21**a comprises a mechanism for changing a spread angle of a light propagated therethrough by changing a shape of the core part **21**a along a light guiding axis.

The spread angle of the light emitting element **11** in the x-axis direction is about **6°** that is less than an acceptance angle of the optical fiber **30**a. Therefore, it is possible to realize the optical coupling with the optical fiber **30**a, without modifying a width Dss of an end portion of the core part **21**a of the optical waveguide **20**a at the input side (i.e. at the side of the light emitting element **11**).

Herein, this optical coupling between the core part **21**a and the optical fiber **30**a provides a Y-coupler. As described in Japanese Patent No. 3337691**,** a coupling ratio is proportional to a ratio of a squared diameter of a receiving fiber core (optical fiber core sectional area) to the squared diameter of a receiving fiber core (optical fiber core sectional area) plus a squared diameter of a feeding fiber core (optical waveguide core sectional area). Therefore, it is preferable to reduce the squared diameter of the feeding fiber core in order to realize the high efficiency optical coupling of the light from the feeding fiber core to the receiving fiber core.

Accordingly, it is possible to improve the coupling efficiency by reducing a width Dee of another end portion of the core part **21**a of the optical waveguide **20**a at the output side (i.e. at the side of the reflection coating **23**a) to be approximately equal to the acceptance angle of the optical fiber **30**a. Of course, when the spread angle of the core part **21**a of the optical waveguide **20**a is greater than the acceptance angle of the optical fiber **30**a, the input light is not propagated through the optical fiber **30** after coupling, thereby generating the optical loss. Therefore, it is preferable that the spread angle of the core part **21**a of the optical waveguide **20**a at the coupling part **27** is not greater than the acceptance angle of the core **31**a of the optical fiber **30**a.

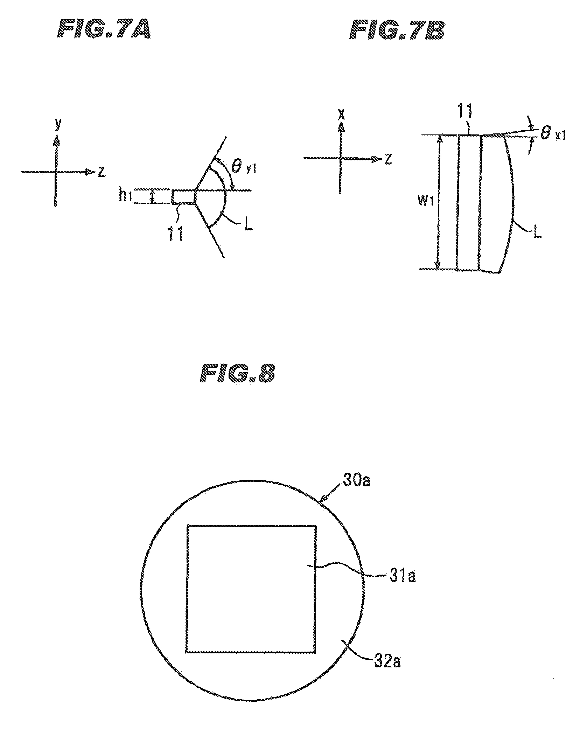

Herein, an example of the coupling efficiency will be explained with referring to **FIG.6** and **FIGS.7**A and **7**B.

**FIG.6** is a simplified schematic diagram showing a structure of the core part in the optical waveguide as shown in **FIG.5.**

**FIG.7**A and **FIG.7**B are explanatory diagrams showing a relationship between a size of a light emitting element and an emission angle in the optical waveguide type optical coupling arrangement shown in **FIG.5.**

The light emitting element **11** has an element with w**1** of **100** $\mu$m in the x-axis direction in **FIG.6,** and a height h**1** of **1** $\mu$m. A divergence angle $\theta$y**1** in the y-axis direction and a divergence angle $\theta$x**1** in the x-axis direction of the laser light L of the light emitting element **11** are **60°** and **6°**, respectively as shown in **FIGS.7**A and **7**B.

**FIG.6** shows the core part **21**a in the optical waveguide 20a in a simplified manner. The deformed part **26** of the core part **21**a has a curved portion as shown in **FIG.5.** However, the curved portion is expressed by straight lines for the purpose of simplification in **FIG.6.**

**FIG.8** is a cross sectional view of the optical fiber **30**a in the optical waveguide type optical coupling arrangement shown in **FIG.5.**

It is preferable that the optical fiber **30**a to which the laser light L is inputted has a flat bonding surface to be bonded with the optical waveguide **20**a. For the purpose of simplified explanation, the optical fiber **30**a comprises the core **31**a doped with rare earth element such as Yb, Er, Tm and having a rectangular cross section with one side of **100** $\mu$m, and the cladding part **32**a comprising a low refractive index resin as shown in **FIG.8.** The NA of the optical fiber **30**a is **0.46.** In this preferred embodiment, the cross section of the core **31**a is not limited to the rectangular shape. It is sufficient if the core **31**a has a bonding surface to be bonded (coupled) to the optical fiber **20**a, which is flat (parallel) with respect to a bonding (coupling) surface of the optical waveguide **20**a.

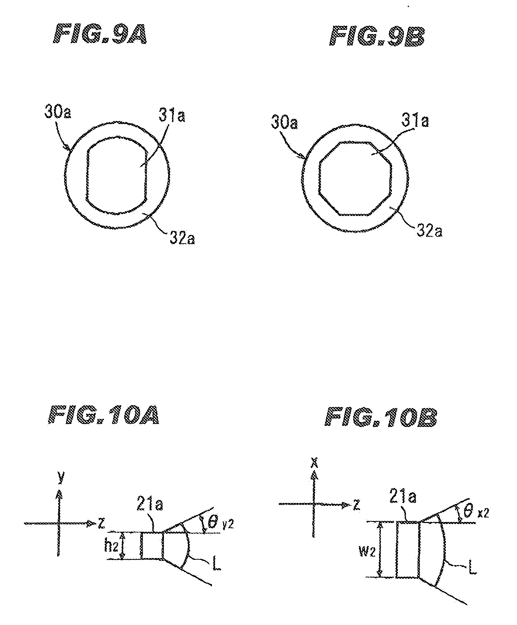

**FIGS.9**A and **9**B are cross sectional views of variations of optical fiber **30**a in the optical waveguide type optical coupling arrangement shown in **FIG.5.**

As described above, the core **31**a may have a non-circular cross section such as a tambour shape as shown in **FIG.9**A. Further, the core **31**a may have polygonal cross section such as an octagonal shape as shown in **FIG.9**B.

It is possible to calculate the acceptance angle of the optical fiber **30**a from NA of the optical fiber **30**a, which is about **28°**. Herein, based on the formula (**1**) with treating the spread angles and the divergence widths in the respective axes independently, the divergence angles in the respective axes at the coupling part **27** of the optical waveguide **20**a are calculated to be **28°**, respectively.

**FIG.10**A and **FIG.10**B are explanatory diagrams showing a relationship between a size of an optical waveguide coupling part and an emission angle in the optical waveguide type optical coupling arrangement shown in **FIG.5.**

As a result, the core part **21**a of the optical waveguide **20**a has a divergence height h**2** of about **2** μm in the y-axis direction as shown in **FIG.10**A and a divergence width w**2** of about **23** μm in the x-axis direction as shown in **FIG.10**B. In the core part **21** as configured above, a divergence angle θy**2** in the y-axis direction and a divergence angle θx**2** in the x-axis direction of the laser light L are **28°**, respectively, which are approximately equal to the acceptance angle of the optical fiber **30**a.

As described above, the coupling ratio is proportional to the receiving optical fiber core sectional area to the receiving optical fiber core sectional area plus the optical waveguide core sectional area. In the second preferred embodiment, the receiving optical fiber core sectional area is **10000** μm$^2$ and the receiving optical fiber core sectional area plus the optical waveguide core sectional area is **10046** μm$^2$. Therefore, **99.5**% of the light outputted from the core part **21**a of the optical waveguide **20**a is coupled to the core **31**a of the optical fiber **30**a.

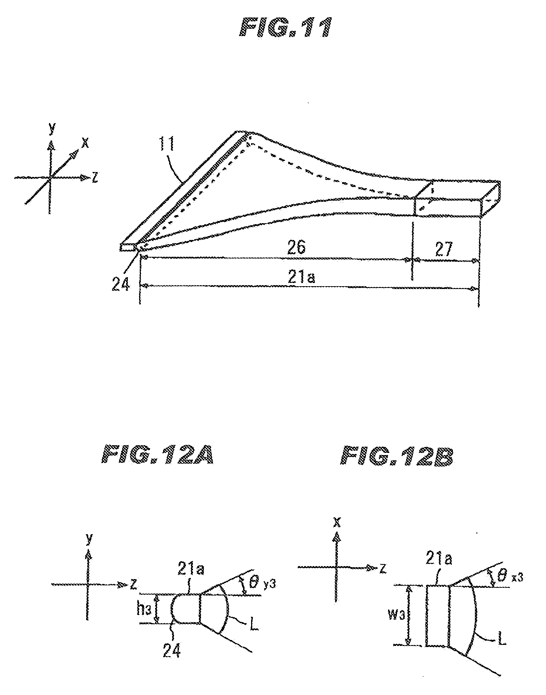

**FIG.11** is a simplified schematic diagram showing a structure of a variation of the core part **21**a in the optical waveguide as shown in **FIG.6.**

**FIG.12**A and **FIG.12**B are explanatory diagrams showing a relationship between a size of an input and output part and a divergence angle in the core part **21**a shown in **FIG.11.**

The core part **21**a of the optical waveguide **20**a has a divergence height h**3** of about 2 μm in the y-axis direction as shown in **FIG.12**A and a divergence width w**3** of about 23 μm in the x-axis direction as shown in **FIG.12**B. In the core part **21**a as configured above, a divergence angle θy**3** in the y-axis direction and a divergence angle θx**3** in the x-axis direction of the laser light L are **28°**, respectively, which are approximately equal to the acceptance angle of the optical fiber **30**a.

As described with referring to **FIG.5,** since the optical waveguide **20**a has a plate-like shape, it is easy to conduct the processing in the y-axis direction. Accordingly, as shown in **FIG.11,** a laser input side end surface **24** of the core part **21**a of the optical waveguide **20**a may have a convex cross section. Namely, the laser input side end surface **24** is polished to have a spherical surface in place of deforming the core shape of the core part **21**a of the optical waveguide **20**a in the y-axis direction, in order to provide an effect of providing a plano-convex cylindrical lens.

Concerning a method for processing a spherical surface of the laser input side end surface **24** and a method for setting a curvature for obtaining the effect of the plano-convex cylindrical lens, the detailed description thereof is omitted, since they are similar to conventional lens processing method and curvature setting method.

(Third preferred embodiment)

Next, a coupling efficiency in the optical waveguide type optical coupling arrangement using the semiconductor laser bar comprising "BAC**50**c-**9**XX-**03/ 04**" and the optical waveguide will be explained.

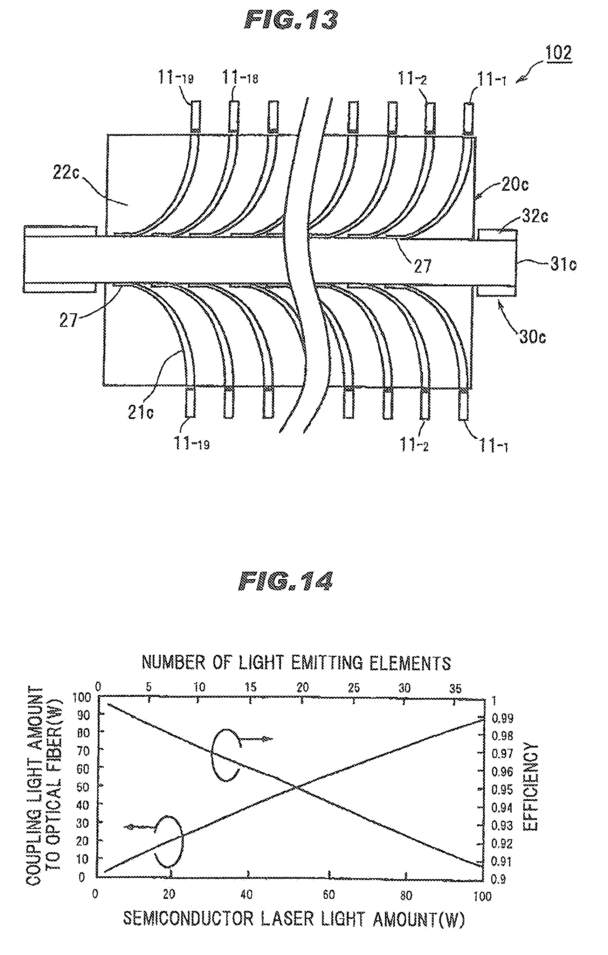

**FIG.13** is a schematic diagram of an optical waveguide type optical coupling arrangement **102** in a third preferred embodiment according to the present invention.

As shown in **FIG.13,** in the optical waveguide type optical coupling arrangement **102,** nineteen pieces of light emitting elements **11-1** to **11-19** of a semiconductor laser bar **10** are coupled to an optical fiber **30**c via an optical waveguide **20**c provided at each of both sides of the optical fiber **30**c.

In more concrete, the optical waveguides **20**c are provided at the both sides of the optical fiber **30**c, respectively. Similarly to the core part **21**a shown in **FIG. 5,** a core part **21**c is formed in the optical waveguide **20**c corresponding to each of the light emitting elements **11-1** to **11-19,** and coupled to each of the light emitting elements **11-1** to **11-19.** Thereafter, a coupling part **27** of each of the core parts **21**c is coupled to the optical fiber **30**c at the both sides of the optical fiber **30**c.

In this structure, the laser light of a first light emitting element **11-1** is input to the optical fiber **30**c, and **99.5**% of the light quantity thereof is guided to the optical fiber **30**c while **0.5**% of the light quantity thereof as a remainder is lost at the coupling part **27** of the core part **21**c of the optical waveguide **20**c.

Next, the laser light of a second light emitting element **11-2** is input to the optical fiber **30**c, and **99.5**% of the light quantity thereof is guided to the optical fiber **30**c while **0.5**% of the light quantity thereof as a remainder is lost at a coupling part **27** of the core part **21**c of the optical waveguide **20**c. Further, **0.5** % of the light coupled from the first light emitting element **11-1** guided through the optical fiber **30**c is lost at the coupling part **27** of the core part **21**c for the second light emitting element **11-2.**

Finally, the laser light of a nineteenth light emitting element **11-9** is input to the optical fiber **30**c, and **99.5**% of the light quantity thereof is guided to the optical fiber **30**c while **0.5**% of the light quantity thereof as a remainder is lost at a coupling part 27 of the core part **21**c of the optical waveguide **20**c for the nineteenth light emitting element **11-9.** Further, **0.5** % of the lights coupled from the first light emitting element **11-1** to an eighteenth light emitting element **11-18** guided through the optical fiber **30**c is lost at the coupling part **27** of the core part **21**c for the nineteenth light emitting element **11-19.**

**FIG.14** is a table of graphs showing a coupling efficiency of an input laser light to the optical fiber in the present invention.

**FIG.14** shows the light quantity of the light inputted to the optical fiber and the coupling efficiency in the case that the semiconductor laser bar **10** comprising two sets of the first to nineteenth light elements **11-1** to **11-19** are coupled to the optical fiber **30**c.

Herein, a laser output power of each light emitting element **11** is **2.63**W. The output power of the semiconductor laser bar **10** comprising the first to nineteenth light emitting elements **11-1** to **11-19** in total is **50**W. Since the loss of the light guided through the optical fiber **30**c is generated at the coupling part **27**, the coupling efficiency is decreased in accordance with an increase in the number of the light emitting elements **11**.

However, even in the case that two semiconductor laser bars **10** (the number of the light emitting elements is thirty eight) are used, it is possible to obtain the coupling efficiency of **90**%.

(Fourth preferred embodiment)

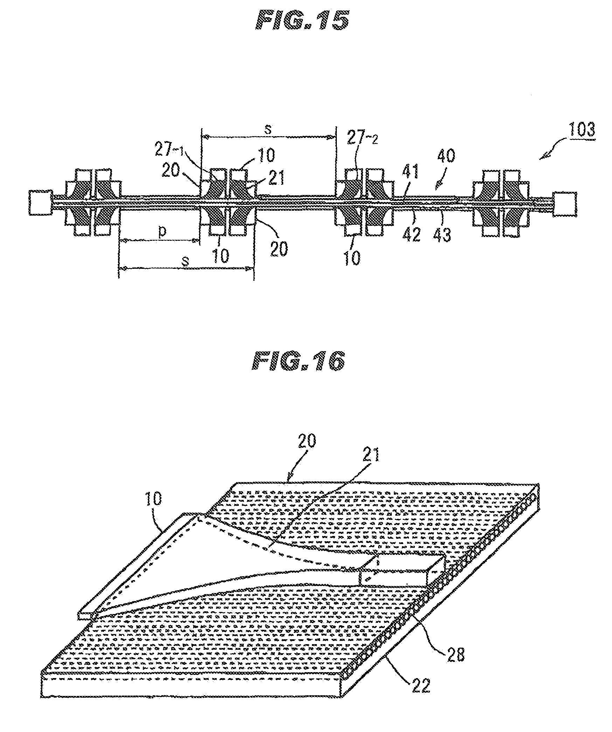

**FIG.15** is a schematic diagram of an optical waveguide type optical coupling arrangement **103** applied to an optical fiber laser in a fourth preferred embodiment according to the invention.

In the optical waveguide type optical coupling arrangement **103** as shown in **FIG.15,** a laser output light is optically coupled to a double clad fiber **40** for an optical fiber laser via the optical waveguide **20**. The double clad fiber **40** for an optical fiber laser comprises a rare earth element doped core **41** doped with Yb and having an outer diameter of about **5** $\mu$m, and two different claddings, namely an inner cladding **42** formed at an outer periphery of the rare earth element doped core **41,** and an outer cladding **43** formed at an outer periphery of the inner cladding **42**. The inner cladding **42** is provided as an exciting light propagation core for propagating an exciting light having a wavelength of **915** nm or **975** nm. An outer diameter of the outer core **43** is about **130** $\mu$m.

A coating layer (not shown) comprising an ultraviolet (UV) curling resin is formed at an outer periphery of the outer cladding **43.** An outer diameter of the coating layer is about **250** $\mu$m. For example, "YDF-**5/130**" manufactured by Nufern, Inc. may be used as a material of the coating layer.

A plurality (**8×2** in **FIG.15**) of the optical waveguides **20** are coupled to the double clad fiber **40** for an optical fiber laser. A core part **21** of each of the optical waveguide **20** is coupled to a side surface of the inner cladding (the exciting light propagating core) **42**.

The laser output light of the semiconductor laser bar **10** is optically coupled to the exciting light propagation core **42** via the optical waveguide **20**. As a result, a laser light with a wavelength of **1030** nm to **1080** nm is emitted. A plurality of the light emitting elements **11,** by which the optical coupling with a predetermined efficiency (for example, **90**%) or more is possible as shown in **FIG.14,** are coupled. An optical coupling part **27-1** of the optical waveguide **20** for a semiconductor laser bar **10** and an optical coupling part **27-2** of the optical waveguide **20** for another semiconductor laser bar **10** are arranged with a constant distance "s" corresponding to, for example, a fiber length of the double clad fiber **40** for an optical fiber laser by which 90% or more of the exciting light is absorbed.

According to this structure, the laser light coupled from the semiconductor laser bar 10 and propagated through the exciting light propagation core **42** is absorbed by the rare earth element doped core **41**. Therefore, by arranging another set of the semiconductor laser bar **10** and the optical waveguide **20** after the absorption of the exciting light by the rare earth element doped core **41,** it is possible to optically couple a large quantity of the exciting lights (the laser lights) to a single piece of the double clad fiber **40** for an optical fiber laser.

Further, as shown in **FIG.15,** the optical waveguide **20** having a symmetrical structure are arranged to be opposed to each other with a pitch "p", and the propagation light is propagated in both directions along a longitudinal direction of the double clad fiber **40** for an optical fiber laser.

According to this structure, almost all of the exciting light is absorbed by a part of the double clad fiber 40 for an optical fiber laser corresponding to the pitch p. Further, the amount of the exciting light absorbed by a part of the double clad fiber 40 for an optical fiber laser corresponding to the pitch s is increased by two times. Still further, a heat generation due to the light absorption can be equalized along the longitudinal direction of the double clad fiber 40 for an optical fiber laser, namely, the absorbed light quantity can be equalized along the longitudinal direction of the double clad fiber **40** for an optical fiber laser.

(Structure of the optical waveguide)

Next, an example of the optical waveguide structure used in the present invention will be explained.

In the optical waveguide structure according to the present invention, the core part **21** of the optical waveguide **20** comprises a material same as the core of the optical fiber to be coupled or a material having a refractive index same as that of the core of the optical fiber to be coupled. For example, when an optical fiber comprising an exciting light propagation core comprising quartz (silica) is used, it is preferable to choose the quartz as material of the core part **21** of the optical waveguide **20**. In this case, it is preferable that the cladding **22** of the optical waveguide **20** comprises a material having a refractive index lower than that of the quartz, for example, quartz doped with F.

**FIG.16** is a schematic diagram of a perspective view of an optical waveguide structure in the optical waveguide type optical coupling arrangement according to the invention.

As shown in **FIG.16,** the cladding part **22** may be formed to constitute a clad structure comprising air holes **28,** thereby reducing an effective refractive index. At this time, similar air holes may be formed around the core part **21.** In order to easily manufacturing the clad structure, a cladding part comprising the air holes **28** may be provided only at a bottom side of the core part **21** of the optical waveguide **20,** and an air cladding may be provided at side surfaces and an upper side of the core part **21** of the optical waveguide **20.** Alternatively, the core part **21** of the optical waveguide **20** may be covered with a resin having a low refractive index, for example, the same material used in the clad **32a** comprising the low refractive index resin in **FIG.8.**

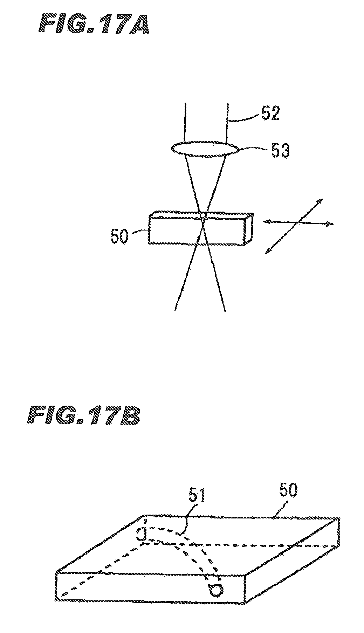

**FIGS.17**A and **17**B are explanatory diagrams showing a method for forming an optical waveguide core in the optical waveguide structure in the invention.

As shown in **FIG.17**A, a pulse laser light **52** is irradiated via a collecting lens **53** to a glass **50** having a refractive index lower than the quartz (for example, fluoride glass). As shown in **FIG.17B,** an optical waveguide core **51** having a desired shape may be formed in the glass **50.**

**Claims**

1. An optical waveguide type optical coupling arrangement comprising:

   a semiconductor laser bar comprising a plurality of light emitting elements arranged in parallel;
   an optical waveguide comprising a core part for guiding a light emitted from each of the light emitting elements in the semiconductor laser bar and a cladding part formed around the core part; and
   an optical fiber comprising a core and a cladding formed around the core for confining the light into the core;

   wherein the optical waveguide is bonded to a side surface of the optical fiber,
   wherein the light emitted from the laser bar is input to a side surface of the core of the optical fiber.

2. The optical waveguide type optical coupling arrangement, according to claim **1,** wherein the core part of the optical waveguide has a tapered shape such that a spread angle of the light emitted from the light emitting element is not greater than an acceptance angle of the optical fiber.

3. The optical waveguide type optical coupling arrangement, according to claim **1** or **2,** wherein a size of the core part of the optical waveguide at an output end side is determined such that a spread angle of the light at the output end side is not greater than an acceptance angle of the optical fiber.

4. The optical waveguide type optical coupling arrangement, according to any of claims **1** to **3,** wherein the core of the optical fiber comprises a bonding surface bonded to the optical waveguide, the optical waveguide comprises a bonding surface bonded to the core, and the bonding surface of the core is flat to the bonding surface of the optical waveguide.

5. The optical waveguide type optical coupling arrangement, according to any of claims **1** to **4,** wherein the core part comprises a mechanism for changing a spread angle of a light propagated therethrough by changing a shape of the core part along a light guiding axis.

6. The optical waveguide type optical coupling arrangement, according to any of claims **1** to **5,** wherein the core part comprises a deformed part that is deformed along a light guiding axis and the deformed part changes a spread angle of a light propagated through the deformed part.

7. The optical waveguide type optical coupling arrangement, according to any of claims **1** to **6,** wherein the core part of the optical waveguide comprises a side surface facing to the semiconductor laser bar and the side surface of the core part is lens-processed.

8. The optical waveguide type optical coupling arrangement, according to any of claims **1** to **7,** wherein the core part of the optical waveguide comprises a side surface facing to the semiconductor laser bar, and the side surface of the core part has a convex cross section.

9. The optical waveguide type optical coupling arrangement, according to any of claims **1** to **8,** wherein:

   the optical waveguide changes a direction of the light emitted from each of the light emitting elements and propagated through the core part and guides the light to a side surface of the optical fiber.

10. The optical waveguide type optical coupling arrangement, according to any of claims **1** to **9,** wherein:

   the optical fiber comprises a double clad fiber for an optical fiber laser, comprises a core doped with a rare earth element, and two different claddings formed around the core.

11. An optical waveguide for the optical waveguide type optical coupling arrangement according to any of claims **1** to **10,** comprising:

   a core part for guiding a light emitted from each of the light emitting elements in the semiconductor laser bar; and
a cladding part formed around the core part,

wherein the core part comprises a deformed part that is deformed along a light guiding axis and the deformed part changes a spread angle of a light propagated through the deformed part.

## FIG.1

## FIG.2

**FIG.3**

**FIG.4**

*FIG.5*

*FIG.6*

FIG.7A

FIG.7B

FIG.8

**FIG.9A**

**FIG.9B**

**FIG.10A**

**FIG.10B**

## FIG.11

## FIG.12A

## FIG.12B

## FIG.13

## FIG.14

NUMBER OF LIGHT EMITTING ELEMENTS

## FIG.15

## FIG.16

FIG.17A

52
53
50

FIG.17B

51
50

**FIG.18**

**FIG.19**

## FIG.20

63 LIGHT EMITTING REGION

## FIG.21
### PRIOR ART

FIG.22
PRIOR ART

FIG.23A
PRIOR ART

FIG.23B
PRIOR ART

## FIG.24A
### PRIOR ART

80  81  82

## FIG.24B
### PRIOR ART

86

84  82

Europäisches
Patentamt

European
Patent Office

Office européen
des brevets

## EUROPEAN SEARCH REPORT

**Application Number**

EP 08 16 2657

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/102236 A (NKT RES & INNOVATION AS [DK]; PEDERSEN CLAUS FRIIS [DK]; PEDERSEN MORT) 25 November 2004 (2004-11-25) <br> * figures 4a-4e,6,8a,8b,11a * <br> ----- | 1-11 | INV. <br> G02B6/42 <br> H01S3/067 |
| X | US 2003/112497 A1 (ALDUINO ANDREW C [US] ET AL) 19 June 2003 (2003-06-19) <br> * figures 3,4 * <br> ----- | 1 | |
| X | WO 2004/112206 A (SOREQ NUCLEAR RES CT [IL]; SINTOV YOAV [IL]) <br> 23 December 2004 (2004-12-23) <br> * the whole document * <br> ----- | 1 | |
| X | WO 02/50585 A (CQUINT COMM CORP [US]) <br> 27 June 2002 (2002-06-27) <br> * the whole document * <br> ----- | 1 | |
| | | | TECHNICAL FIELDS SEARCHED (IPC) <br><br> G02B <br> H01S |

The present search report has been drawn up for all claims

| Place of search | Date of completion of the search | Examiner |
|---|---|---|
| The Hague | 5 December 2008 | Plouzennec, Loïg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 08 16 2657

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2008

| Patent document cited in search report | | Publication date | Patent family member(s) | | Publication date |
|---|---|---|---|---|---|
| WO 2004102236 | A | 25-11-2004 | NONE | | |
| US 2003112497 | A1 | 19-06-2003 | AU | 2002357757 A1 | 30-06-2003 |
|  |  |  | CN | 1602568 A | 30-03-2005 |
|  |  |  | TW | 274447 B | 21-02-2007 |
|  |  |  | WO | 03052888 A1 | 26-06-2003 |
| WO 2004112206 | A | 23-12-2004 | AT | 400075 T | 15-07-2008 |
|  |  |  | EP | 1639679 A2 | 29-03-2006 |
| WO 0250585 | A | 27-06-2002 | AU | 3273802 A | 01-07-2002 |

EPO FORM P0459

For more details about this annex : see Official Journal of the European Patent Office, No. 12/82

**EP 2 028 513 A1**

## REFERENCES CITED IN THE DESCRIPTION

### Patent documents cited in the description

- JP 2007214652 B
- JP 3607211 B
- JP 3337691 B